# EUROPEAN PATENT APPLICATION

(11) **EP 4 353 968 A1**
(43) Date of publication of application: **17.04.2024**
(21) Application number: 22200784.1
(22) Date of filing: 11.10.2022
(51) Int. Cl.: F03D 17/00

(54) **DETERMINING WIND TURBINE LIFETIME**

(71) Applicant: Siemens Gamesa Renewable Energy A/S, 7330 Brande (DK)
(72) Inventor: Elmose, Søren Forbech, 7441 Bording (DK)
(74) Representative: SGRE-Association

(57) **Abstract**

It is described a method of determining a contribution to wear (Ncyc) of at least one bearing of a wind turbine (41), the method comprising: performing a computational simulation of the mechanical behaviour of at least a portion of the wind turbine (41) including the bearing for each of plural given operation conditions (28, 29) of the wind turbine across a predetermined simulation time window (8); determining at least one mechanical moment (Mx, My), in particular two mechanical moments, across the simulation time window (8) based on the simulation, the mechanical moment acting (Mx, My) on the bearing; determining at least one force related quantity (21) time series (22) across the simulation time window (8) based on the mechanical moment (Mx, My) across the simulation time window (8); determining a stress related quantity (23) time series across (24a,...) the simulation time window (8) based on the force related quantity time series (22) and in particular based on a pitch position (14); evaluating the stress related quantity time series (24a,...), in order to obtain the contribution to wear (Ncyc) associated with the respective operation condition (28, 29) and the simulation time duration.

## Description

### Field of invention

The present invention relates to a method and a corresponding arrangement of determining a contribution to damage/impairment/wear of at least one bearing of a wind turbine. Further, the invention relates to a method and a corresponding arrangement of estimating a wear indicator of a bearing of a wind turbine. Further the present invention relates to a method and a corresponding arrangement of controlling a wind turbine comprising at least one bearing. Still further the present invention relates to a wind turbine.

### Art Background

A wind turbine comprises a number of bearings which rotatably support for example a rotation shaft or a rotor blade. A blade bearing is designed to support rotatably the rotor blade and allow to adjust a blade pitch angle as desired.

During operation of the wind turbine, the one or more bearings or subjected to wear and/or impairment and/or at least partial damage. The bearings are subjected to mechanical stress due to forces generated by impacting wind or due to movements of components. Blade pitch bearings may be designed and operated under the assumption that all bearings will experience the conditions which is presented in designed simulations. Conventionally, a blade bearing may be designed and a risk model may be calculated based on design simulations.

In reality the bearings may in many times or in many cases experience less severe conditions or may experience more severe conditions compared to those assumed in the designed simulations. The result of this discrepancy may be that at the design turbine lifetime end the blade bearing may still have residual capacity or in the other case that the rotor blade bearing has increased risk of failure before the designed turbine lifetime end.

Conventionally, a predicted failure rate may have only compared to the actual failure rate in retrospect and based on that the prediction of warranty cost/expenditure is continuously updated. However, the knowledge obtained from this kind of procedure may only influence the design of construction of future wind turbines or the estimation of the design lifetime.

Conventionally, simulations may have been calibrated/validated on prototype wind turbines but will not account for the individual wind conditions and operational hours (sometimes the turbine is shut down by the customer, and in this period the bearing will experience significantly reduced wear) for each wind turbine.

It has however been observed that the simulated remaining lifetime of a bearing not in all situations or circumstances reflects the true remaining lifetime of the bearing.

Thus, there may be a need for a method and a corresponding arrangement of determining a contribution to wear of at least one bearing of a wind turbine, there may be a need for a method of estimating a wear indicator of a bearing of a wind turbine, there may be a need of a method and a corresponding arrangement of controlling a wind turbine, taking into account a wear indicator of the bearing.

### Summary of the Invention

Embodiments of the present invention may enable to determine contribution to wear taking into account the individually experienced external conditions, like wind conditions in particular taking into account wake versus free wind, mean wind on the give side and so forth. Embodiments of the present invention may enable to determine the remaining lifetime of the bearing to a higher reliability than conventionally known.

According to an embodiment of the present invention, it is provided a method of determining a contribution to (damage/impairment/) wear of at least one bearing of a wind turbine, the method comprising: performing a computational simulation of the mechanical behaviour of at least a portion of the wind turbine including the bearing for each of plural given operation conditions of the wind turbine across a predetermined simulation time window; determining at least one mechanical moment (e.g. load), in particular two mechanical moments for a blade pitch bearing, across the simulation time window based on the simulation, the mechanical moment acting on the bearing; determining at least one force related quantity (e.g. roller element force, ball force) time series across the simulation time window based on the mechanical moment across the simulation time window; determining a stress related quantity (e.g. contact pressure) time series across the simulation time window based on the force related quantity time series (and in particular based on a pitch position); and evaluating the stress related quantity (e.g. contact pressure) time series, in order to obtain the contribution to wear (e.g. Ncyc) associated with the respective operation condition and the simulation time duration.

The method may be applied to one or more rotor blade pitch bearings, for each rotor blade pitch bearing in particular two moments may be determined.

The method may be implemented in software and/or hardware and may be performed or controlled by a corresponding arrangement for determining a contribution to wear. The contribution to wear may indicate how much - operating the wind turbine under the respective operation conditions - wear and/or damage and/or impairment the bearing is subjected to. The wear may also indicate stress and the contribution to the wear may indicate the contribution to the stress the wind turbine bearing is subjected to. The contribution to wear may for example be indicated as number of standard stress cycles.

The bearing may be designed to sustain a particular amount of cumulated wear or a particular amount of cumulated (standard or equivalent) stress cycles. A stress cycle may involve for example a profile of contact pressure the bearing, or in particular a raceway of the bearing, is subjected too. The stress cycle may be due to a roller element within the bearing contacting the raceways of the bearing. The contributions to wear may be given in different physical units or as a mere number, for example number of experienced standard stress cycles. A given stress cycle for example indicating the contact pressure across the time, may be converted to a particular number of standard or equivalent stress cycles, as known in the art. The standard stress cycle may be a cycle which has a maximum of the contact pressure of a particular value, such as 3000 MPa.

The bearing may comprise a rotor blade pitch adjustment system bearing or for example a bearing of a main shaft or a secondary shaft of the wind turbine. The pitch bearing may allow rotation substantially around a longitudinal axis of the rotor blade in order to adjust a blade pitch angle.

The computational simulation may for example utilize a simulation package.

The turbine behavior and loads may e.g. be simulated in BHawC. For the bearing calculations Ansys, Julia and/or Matlab may be utilized, but other software could also be applied.

The mechanical behaviour may be simulated by considering the geometrical/material configuration of for example the wind turbine blade and the wind turbine blade bearing.

The plural given operation conditions may include external and/or internal operation conditions of the wind turbine as will be explained below.

The predetermined simulation time window may be set according to the particular application, and may range within 10 to 15 minutes for example. The simulation time window may be sampled or subdivided into plural simulation time steps having for example a duration of between 0.01 s and 0.1 s.

Normal operational timeseries may e.g. be simulated with 25 Hz, meaning a duration per time step of 1s/25 = 0.04 s. In some special events frequency to e.g. 100 Hz, so 0.01s

The mechanical moment may be computed from forces generated by the impacting wind and the geometrical configuration of the rotor blade and the blade bearing. In particular two mechanical moments, for example one in the X-direction and one in the Y-direction, may be determined, wherein the X-direction and the Y-direction may span the plane corresponding or being parallel to the plane as spanned or defined by the bearing rings. The bearing may comprise an inner raceway, roller elements in contact with the inner raceway and an outer raceway with which the roller elements are also in contact. The roller elements may comprise one or more roller balls or roller cylinders for example. The inner raceway may be provided at an inner ring and also the outer raceway be provided at an outer ring. The mechanical moment may act on one of the raceways relative to the other of the raceways. Between the raceways and in contact with the raceways the roller elements are arranged.

The force-related quantity may for example correspond to a force experienced or exerted by a roller element, for example a ball force acting between the respective roller element and the inner and/or outer raceway. The forces acting on the inner raceway as well as the forces acting on the outer raceway may be determined and considered. In particular, the forces mediated or exerted or experienced by all roller elements between the two raceways be considered individually regarding their actions on the inner raceway and the outer raceway. Primarily, the forces may be considered as affecting (structural) integrity of the raceways. The roller elements may be considered as not being impaired by the operation of the wind turbine.

The force-related quantity time series may correspond to a time series (plural time steps) (of a quantity) which is related to the force which acts on the inner raceway and/or the outer raceway. The respective forces may be deduced based on the determined mechanical moment(s) and the geometrical configuration of the rotor blade and/or the respective bearing. The computational simulation may require input data regarding the definition of the geometrical configuration of the portion of the wind turbine being simulated including the bearing and in particular also including the rotor blade or the plural rotor blades which may be connected or coupled to a main shaft of the wind turbine. The force-related quantity time series may correspond to the values of the quantity related to force across the plural time steps forming the simulation time window.

The force-related time series may in particular be considered in combination with a corresponding pitch position (time series) in order to determine the stress-related quantity time series. The stress-related quantity may for example indicate the mechanical stress or strain, in particular a contact pressure and/or subsurface stress or strain, the raceway(s) and/or the roller element is subjected to across the plural time steps within the simulation time window. During performing the simulation, the movement of the roller elements within the bearing and/or the movement of the inner raceway and/or the outer raceway may be modelled. Due to uncertainties regarding the initial positioning of the roller elements, plural simulations may be performed for one given operational condition, wherein different initial positions of the roller elements are adopted.

The stress-related quantity time series may for example comprise one or more stress cycles, having same or different maximal stress values, in particular contact pressure values and/or subsurface stress or strain. The plural stress cycles, in particular having different heights, may be combined and converted into for example a (single) quantity or number representing the contribution to wear.

The final result may represent or indicate a failure rate and/or risk profile. The model may create a stress cycle "Markov matrix", which may be used to calculate the risk profile. The Markov matrix is a simple matrix containing cycles or occurrences of a given combination of mean stress and stress range.

In particular, the time series of the stress-related quantity (in particular contact pressure) may be converted or evaluated to result in a number of standard or equivalent stress cycles. This number may reflect the wear or damage or impairment the bearing is simulated to have been subjected to after having completed operation having the operational conditions as defined. The equivalent stress cycles may be used for visualization and quick evaluations.

When the contribution to the wear is determined in the above explained manner, it can advantageously be utilized in order to estimate the respective cumulative wear a bearing of a wind turbine has been subjected to after the wind turbine has been operated across a particular operation interval. Then by utilizing a combination, in particular a sum of the wear contributions, for example the remaining lifetime of the wind turbine bearing, may be determined.

According to an embodiment of the present invention, the force related quantity indicates a mechanical force, in particular roller element force or ball force, acting at at least one position at a raceway of the bearing, wherein the stress related quantity indicates a stress, in particular contact pressure, at at least one position at a raceway of the bearing; and/or the method further comprising: evaluating the stress related quantity time series together with a pitch angle position of a rotor blade supported by the bearing to employing a method of cycle counting, in particular rainflow count.

The roller element force may be determined which acts on the inner raceway as well as on the outer raceway of the bearing. During operation in the simulation time interval, the position at which the roller element force acts may change. The simulation may account for the respective positions where the force acts on the raceway. In this sense, the simulation may determine a location-dependent force on the raceway(s) based on which the respective stress-related quantity may also be determined to be location-specific. Thereby, the simulation results may be more reliable.

The rain flow counting algorithm may be used to calculate the fatigue life of the bearing in order to convert a loading sequence of bearing stress (for example contact pressure time series) into an equivalent set of constant amplitude stress reversals, in particular resulting in a particular number of standard stress cycles. The method may successively extract the smaller interruption cycles from a sequence which models the material memory effect seen with stress-strain hysteresis cycles. The rain flow counting algorithm was developed by Tatsuo Endo and N. Matsuishi in 1968. According to embodiments of the present invention, the rate flow counting algorithm may be utilized.

According to an embodiment of the present invention, evaluating the stress related quantity (e.g. contact pressure) time series comprises: assigning different values of the stress related quantity in the time series to different bins; counting number of occurrences in each bin; combining the numbers of occurrences considering the associated bins, in particular summing the numbers of occurrences weighted with a bin number, in order to obtain the contribution to wear.

The stress-related quantity across the simulation time window may in particular be evaluated to result in a single value, in order to simplify the result database. The binning may allow to classify the different values of the stress-related quantity, simplifying the method in particular reducing the required amount of storage. By summing the numbers of the occurrences in each bin weighted with a bin number (for example indicating the rank of the respective values of the stress-related quantities), a standardization of the contribution to wear may be obtained. The sketched procedure may assume that there is a substantially equivalent wear or damage or impairment of a first number of stress cycles having a first intensity or height as a second number of second stress cycles having a second height or intensity. Thereby it may be simpler to accumulate the contribution to wear or damage or impairment as caused by different intensities or amounts of stress, in particular contact pressure.

According to an embodiment of the present invention, the bearing is at least a portion of a bearing system of a blade pitch angle adjustment system for adjusting a pitch angle of a rotor blade; and/or wherein the portion of the wind turbine includes at least one of: at least one rotor blade; a bearing system of a blade pitch angle adjustment system; at least one raceway of at least one bearing; at least one roller element or roller ball of at least one bearing; and/or wherein the simulation time window is between 5 min and 15 min, in particular substantially 10 min.

According to other embodiments, more components of the wind turbines may be taken into account during the simulation. Other embodiments may allow to model other components of the wind turbines, in particular other bearings. The roller elements, in particular roller balls, may be arranged between an outer raceway and an inner raceway of the bearing, the outer raceway may be formed by an inner surface of an outer ring and the inner raceway may be formed by an outer surface of an inner ring.

According to an embodiment of the present invention, the operation condition contains values indicating at least one of: at least one external or environmental parameter, the wind turbine under consideration is subjected to, in particular comprising at least one of: a wind speed, in particular minimum and/or maximum and/or mean and/or standard deviation across the simulation time window; a turbulence, in particular minimum and/or maximum and/or mean and/or standard deviation across the simulation time window.

Both, the external and the environmental parameters influence the forces acting on the different portions of the simulated elements. When also the minimum and/or maximum and/or mean and/or standard deviation across the different parameter is considered, respective distributions of the simulation results may also be obtained which may advantageously be utilized in applying the simulation results later for evaluation of an actual wind turbine operational period. Both, the wind speed and/or the turbulence may heavily effect the forces acting on the different components. In other embodiments, such as for an offshore wind turbine, also wave parameters may be considered, like wave height, wave frequency or wave wavelength for example.

According to an embodiment of the present invention, the operation condition contains values indicating at least one of: at least one wind turbine internal operational parameter, associated with the wind turbine under consideration, in particular comprising at least one of: a control setting; a control scheme; a rotational speed; a pitch angle of the rotor blade comprising the bearing; a rotor blade load, in particular flap and/or edgewise moment; a wind turbine power output.

The wind turbine internal operation parameter may comprise all operation parameters of the wind turbine which are different from the external operation parameters like environmental parameters. The control setting may for example comprise a definition of a rated power output, a rated rotational speed, a rated wind speed, a rotational speed-power curve and so on. The considered control setting may influence also the control of the wind turbine during the simulation time window, thereby also affecting the resulting forces. The control scheme may for example comprise a definition of a normal operation a curtailed operation and so on. The control setting and/or control scheme may also indicate in what sense the control of the wind turbine may change in full load operation versus partial load operation, for example below a rated wind speed. The control setting and/or the control scheme may involve the definition of one or more reference curves, such as power-rotational speed curve, wind speed-pitch angle curve and so on.

Thereby, typical operational conditions of a wind turbine may be captured and may be taken into account for the simulation.

According to an embodiment of the present invention, across the simulation time window the pitch angle and/or rotational speed stays constant or changes due to simulated control of the wind turbine according to one of plural wind turbine control schemes.

Although particular internal operation parameters, like in particular pitch angle and/or rotational speed, may change during a simulation giving an operational condition, at least the external operational conditions regarding wind speed and/or wind turbulence may stay constant. Thereby, the simulation may reflect a more realistic behaviour of the wind turbine in dependency of the at least the external environmental conditions.

According to an embodiment of the present invention, the contribution to wear indicates degree of damage and/or degree of impairment and/or degree of wear and/or remaining life time and/or elapsed life time, wherein the contribution to wear is in particular expressed as number of standard (or equivalent) stress cycles (Ncyc) of the bearing, in particular in dependency of at least a wind speed and a wind turbulence.

The number of standard stress cycles may for example correspond to the number of stress cycles having a height of 3000 MPa, at least one position at at least one raceway of the bearing is subjected too hereby comparing the output of the simulation with for example conventionally used quantities to express lifetime of a component may be simplified.

According to an embodiment of the present invention, the simulation is run for each of the respective operation conditions several times with different initial values of position of one or more roller elements or roller balls, in order to obtain a distribution of contribution to wear associated with the respective operation condition and the simulation time duration, wherein in particular statistical quantities, in particular mean and/or minimum and/or maximum and/or standard deviation, of the distribution of the contribution to wear are determined.

Taking different initial values for the roller elements into account may improve the accuracy of the resulting estimated contribution to wear. Further the statistical quantities (e.g. statistical moments) may advantageously be used in order to also provide an idea about the distribution of the resulting contribution to wear.

According to an embodiment of the present invention, the method comprises storing the contribution to wear (Ncyc) associated with the respective operation condition (and e.g. the simulation time duration and/or constructive detail about the wind turbine) in an electronic storage, in particular as simulation results requestable by input of the operation condition of interest.

The electronic storage may be a storage for example of a wind turbine controller or a wind park controller or some other separate entity, which may be accessible by all wind turbines of the wind park or may be at least accessible by a wind park controller. The simulation results may in a condensed manner represent data which may be accessed for estimating the wear or in particular number of standard stress cycles at least one bearing has been subjected to after a particular operation period of an actual wind turbine.

According to an embodiment of the present invention, it is provided a method of estimating a wear indicator (Ncyc) of a bearing of a wind turbine, the method comprising: recording operation conditions during wind turbine operation across plural operational duration intervals; retrieving or interpolating damage contribution for each operational duration interval from stored simulation results for the respective operation condition, in particular as obtained according to one of the preceding embodiments; and summing the damage contributions, in order to obtain the wear related indicator.

The method may for example be performed by a portion of a wind turbine, for example a wind turbine controller or a wind turbine evaluation module. The method may in other embodiments be performed by a wind park monitoring system or a wind park controller. The operation conditions may be recorded in a wind turbine electronic storage or a wind park monitoring storage, for example.

When the wind turbine is, at least during one operation duration interval, operated in a respective actual operation condition which differs from any of the operation conditions as comprised in the stored simulation results, the respective contribution to the wear may be interpolated from neighbouring contributions to wear corresponding to operation conditions which are contained within the simulation results. Thereby, the wear indicator may be estimated in a very fast manner.

The wear indicator may be in particular indicate the number of standard cycles the bearing or at least one position on at least one raceway of the bearing has been subjected to. (

The wear indicator (e.g. Ncyc) may be calculated in many individual points (equally) distributed across all raceways, which is used to calculate the risk that the bearing fails in each of the points. The risk of failure of the complete bearing may be determined by calculating the combined risk of failure as a "system risk". The risk of failure can then be converted to a theoretical lifetime or wear based on the accepted failure rate.

According to an embodiment of the present invention, it is provided a method of controlling a wind turbine comprising at least one bearing, in particular pitch adjustment system bearing, comprising: estimating a wear indicator of the bearing according to the preceding embodiment; adjusting a control of the wind turbine in order to increase or decrease bearing usage depending on the estimated wear related indicator.

When the wear indicator of the bearing is estimated in an accurate manner, control of the wind turbine may be adjusted, in particular in order to increase power output and/or decrease loads or impairment of wear of the wind turbine, or in order to reach a combination of such goals.

According to an embodiment of the present invention, the method further comprises comparing the estimated wear indicator to a design wear indicator; adjusting the control comprises: adjust control of the wind turbine for increased bearing usage, in particular including increasing power output, if the estimated wear indicator indicates less wear than the design wear indicator; and/or adjust control of the wind turbine for decreased bearing usage, in particular including decreasing power output, if the estimated wear indicator indicates more wear than the design wear indicator.

The estimated wear indicator may be given for example as an estimated number of standard cycles and the design wear indicator may also be given as a design number of standard cycles the bearing has been subjected to.

Increased bearing usage may for example involve to - at a higher rate - change the pitch angle and/or apply change of the pitch angle more frequently than normally. Decreasing bearing usage may involve to change the pitch angle by a smaller rate and/or apply a change of the pitch angle less frequently than normally.

It should be understood that features, individually or in any combination, disclosed, described, explained or provided for a method of determining a contribution to wear of at least one bearing of a wind turbine, also, individually or in any combination, may apply to an arrangement for determining a contribution to wear of at least one bearing of a wind turbine according to embodiments of the present invention and vice versa.

According to an embodiment of the present invention, it is provided an arrangement for determining a contribution to wear of at least one bearing of a wind turbine, the arrangement comprising: a processor adapted: to perform a computational simulation of the mechanical behaviour of at least a portion of the wind turbine including the bearing for each of plural given operation conditions of the wind turbine across a predetermined simulation time window; to determine at least one mechanical moment, in particular two mechanical moments, across the simulation time window based on the simulation, the mechanical moment acting on the bearing; to determine at least one force related quantity (e.g. ball force) time series across the simulation time window based on the mechanical moment across the simulation time window; to determine a stress related quantity (e.g. contact pressure) time series across the simulation time window based on the force related quantity time series (and in particular based on a pitch position); to evaluate the stress related quantity (e.g. contact pressure) time series, in order to obtain the contribution to wear (e.g. Ncyc) associated with the respective operation condition and the simulation time duration; an electronic storage for storing the contribution to wear (e.g. Ncyc) associated with the respective operation condition.

The arrangement may for example be implemented by a computing system which may not be a part of a wind turbine. The simulations may be performed offline and may require beside the operation conditions also other inputs like mechanical/geometrical/material/design configuration of the modeled components.

According to an embodiment of the present invention, it is provided a wind turbine, comprising: at least one bearing, in particular pitch adjustment system bearing; monitoring equipment for monitoring operation conditions during wind turbine operation across plural operational duration intervals; (in particular recording equipment for recording the operation conditions;) retrieval equipment for retrieving or interpolating damage contribution for each operational duration interval from stored simulation results for the respective operation condition; a processor adapted to sum the damage contributions, in order to obtain the wear indicator; a controller adapted to adjust a control of the wind turbine in order to increase or decrease bearing usage depending on the estimated wear indicator.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Embodiments of the present invention are now described with reference to the accompanying drawings. The invention is not restricted to the illustrated or described embodiments.
Fig. 1 schematically illustrates data considered for determining a contribution to wear of at least one bearing of a wind turbine according to an embodiment of the present invention;
Figs. 2 and 3 illustrate example results of a contribution to wear as obtained according to embodiments of the present invention;
Fig. 4 schematically illustrates an example of a contribution to wear as obtained according to embodiments of the present invention for different operational conditions;
Fig. 5 illustrates an example of monitored operation data such as obtained according to an embodiment of the present invention for evaluating a wind turbine; and
Fig. 6 schematically illustrates a method of controlling a wind turbine according to an embodiment of the present invention also comprising a wind turbine according to the embodiment of the present invention and an arrangement according to the embodiment of the present invention.

### Detailed Description

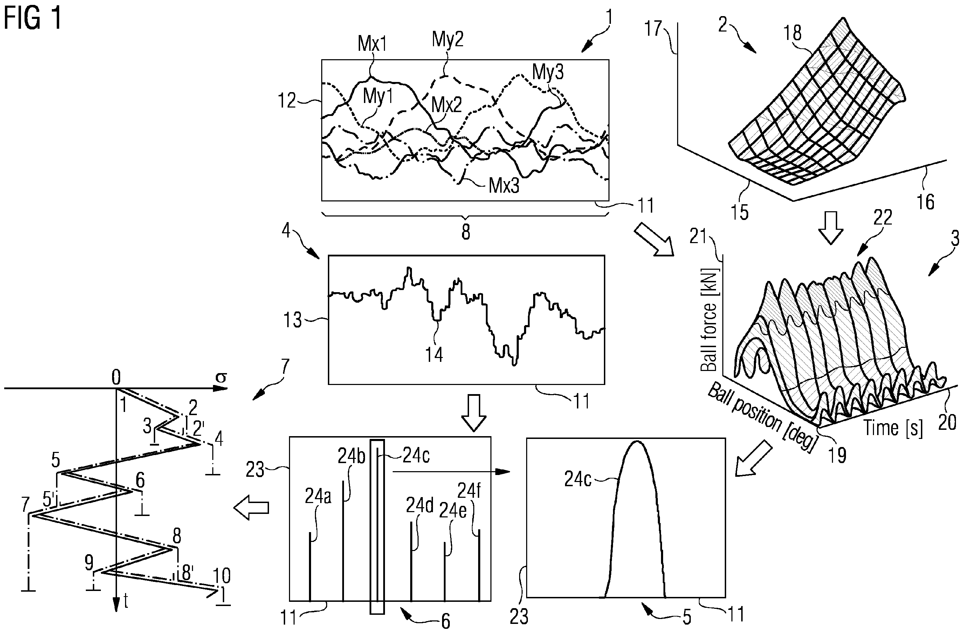

The method 10 schematically illustrated in **Fig. 1** determines a contribution to wear of at least one bearing of a wind turbine. Fig. 1 illustrates a group of load curved 1, an example of determined roller element forces 2, an example of time series of a force-related quantity 3, an example of pitch positions 4, an example of a stress cycle as determined according to embodiments of the present invention (labeled with reference sign 5), an example of a time series of stress cycles 6 as well as an example 7 of performing rain flow counting according to embodiments of the present invention.

Thereby, a computational simulation of the mechanical behavior of at least a portion of the wind turbine including the bearing is performed for each of plural given operational conditions of the wind turbine across a predetermined time window 8 which is illustrated in the partial view 1 of Fig. 1. In the illustrated embodiment the simulation time window 8 comprises 300 simulation time steps. The simulation time window 8 may for example range between 5 minutes and 15 minutes, being substantially around 10 minutes.

Based on the simulation, at least one mechanical moment Mx1, My1, ... is determined across the simulation time window 8, the mechanical moment Mx1, My1, acting on a first bearing of a first rotor blade. Further, the respective bending moments Mx2, My2, Mx3, My3 for two further rotor blades are determined. The respective moments Mx, My represent the moments in the X-direction and the Y-direction acting on the respective bearing of the respective rotor blade, wherein the X-Y-plane in particular lies in a plane or is parallel to a plane, as defined by the respective bearing outer and inner rings.

The method 10 is directed to create a database of several blade bearing raceway fatigue calculation results, in the following also referred to as respective contribution to wear of the bearing of the wind turbine. Each calculation includes a wind turbine simulation under a given wind turbulence and mean wind speed. Thereby, the wind turbulence together with the wind speed is an example of an external operational condition the wind turbine is subjected to. The definition of the operational condition may include more external and/or internal operational parameters.

In the illustrated embodiment, the simulations result in a 10 minute time series of loads (here depicted as moments in figure portion 1 of Fig. 1) and pitch position of figure portion 4. The respective X-axis or abscissas 11 thereby indicate the time step. The ordinate 12 of the figure portion 1 indicates the moment and the ordinate 13 of figure portion 4 indicates the pitch position. The pitch position is given as a pitch position profile 14. It can be appreciated from figure portion 4 of Fig. 1 that the pitch position 14 changes across the simulation time window 8. This may partially be due to the wind turbulence involving wind having changing wind speeds. In accordance to the changing wind speeds due to the turbulence also the wind turbine pitch angle is controlled, as is governed by the adjusted control setting or control scheme which is set during the simulation time window 8.

For each time step the load (for example expressed as moment) on the bearing is evaluated and the contribution to fatigue damage is determined. This may be achieved by applying a six dimensional response plane, wherein the six moments (Mx and My for each of the three blades) are transferred into a ball-force distribution, as is illustrated in figure portion 2 of Fig. 1. Thereby, the axes 15, 16 represent the respective moments Mx, My and the ordinate 17 indicates the roller element force, in particular ball-force as caused according to the given combination of moments. Thereby, a ball-force function 18 in dependency of the different moments acting on the bearing is created or determined.

A ball-force function 18 is determined for each roller element position (defined along the axis 19 in figure portion 3 as circumferential angle position) and in dependency of the time (as is indicated on the axis 20 in figure portion 3). The ordinate 21 in the figure portion 3 illustrates again the ball-force. Thereby, in figure portion 3 of Fig. 1, a time series of a force-related quantity (in particular ball-force) is determined, the time series of the force-related quantity being labeled with reference sign 22. The time series 22 comprises for plural points in time the respective ball-force in dependency of the circumferential position of the roller ball of the bearing.

The ball-force time series 22 is considered in combination with the pitch position 14, in order to derive a time series of a stress-related quantity (in particular contact pressure, as is depicted in figure portion 6 of Fig. 1). Therein, the abscissa 11 indicates again the time step and the ordinate 23 indicates the contact pressure. It can be appreciated from figure portion 6 that the time series of the stress-related quantity comprises plural stress cycles 24a, 24b, 24c, 24d, 24e, 24f which have different values or heights. One stress cycle 24c is illustrated in figure portion 5 in more detail. The stress cycle 24c starts at a particular time step with a value of substantially 0, then raises to a maximum value of about 1800 MPa and then decreases again to substantially 0. Each of such stress cycle may be converted to a particular number of standard stress cycles, for example to a particular number of cycles having a magnitude of 3000 MPa.

As a final step of the method schematically illustrated in Fig. 1, a rain flow counting procedure may be applied as is schematically illustrated in figure portion 7, wherein the axis labeled with a indicates the stress and the axis labeled t indicates the time. Thereby a standardization of the indicator of wear can be achieved.

Briefly, according to Fig. 1, the load inputs in combination with the response plane result in a ball-force time series. Further, the pitch position in combination with the ball-force time series results in a stress time series. From the stress time series a rain flow count can be derived.

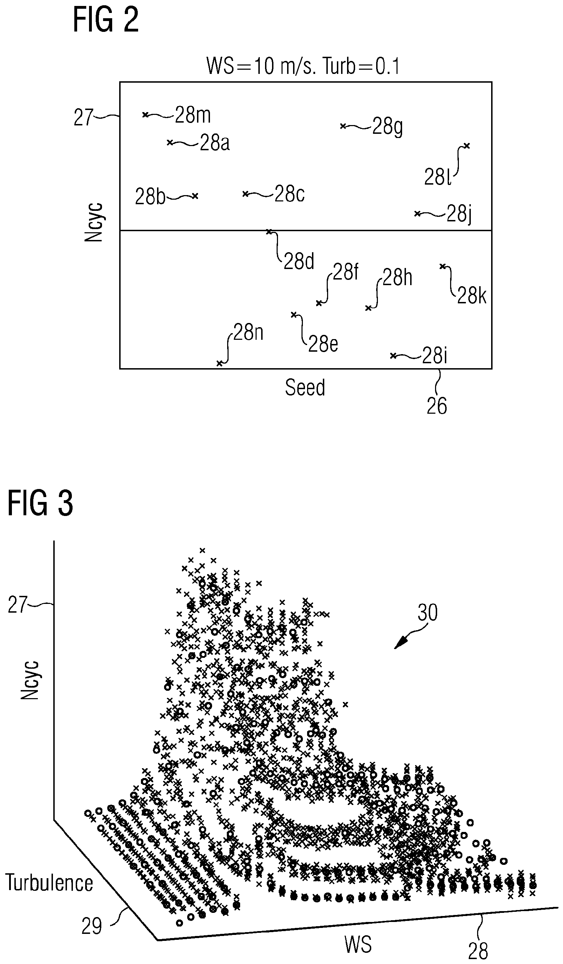

The results of the method as is schematically illustrated in Fig. 1, may span all possible operational wind conditions for the wind turbine in a grid of a given resolution. Each calculation may use as input a set of 10 minutes time series of high-frequency data which is converted to a number which represents the accumulated fatigue damage for the given time series. The grid points contain a number of simulations with same wind conditions but due to the randomness and turbulence and other effects the results may differ, an example of which is illustrated in **Fig. 2****.** The X-axis 26 thereby indicates a seed for determining initial positions for example of a roller ball or a seed for determining the momentary wind speed for a given turbulence attributed for the operational condition of wind speed = 10 m/s and turbulence = 0.1. As can be appreciated from Fig. 2, the randomness of particular data or the uncertainty of particular statistical data, like the turbulence, leads to plural result values of the number of standard cycles (being an example of a contribution to wear) shown as crosses 28a, 28b, ....

The number of results per grid point must be significant to ensure that it is correctly representing the statistical distribution of the accumulated fatigue damage under the given condition.

**Fig. 3** illustrates an exemplary simulation result (distribution), the ordinate 27 indicating the number of standard cycles (representing the contribution of wear), the axis 28 indicating the wind speed and the axis 29 indicating the wind speed turbulence, both examples of defining an operational condition.

The data cloud 30 thereby indicates the contribution to wear for all combinations of wind speed and wind turbulence, wherein for each combination of wind speed and turbulence in particular a distribution of the respective contribution to wear, in particular a distribution of number of standard cycles can be assigned. The data as depicted in Fig. 3 may be stored in an electronic storage for example as simulation results which may be accessible by input of the operational condition of interest.

To perform the needed fatigue calculations maybe a computational expensive job and the effort or computational time may depend on the resolution of the grid and the number of calculations to a grid point. There may be a balance between the accuracy of the results and the calculation time.

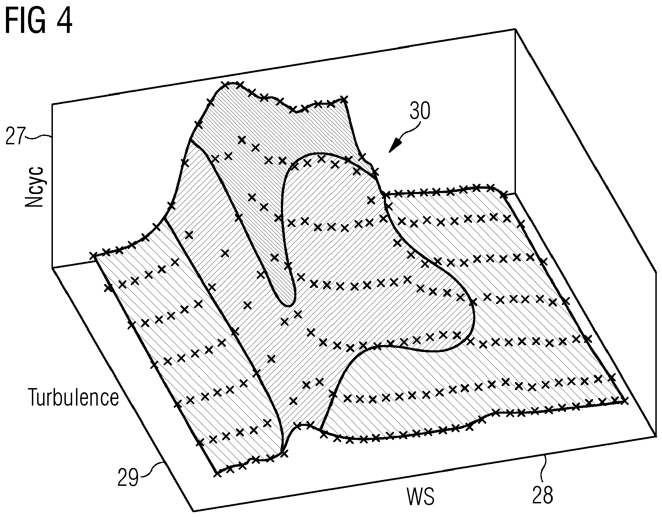

When a sufficient number of calculations has been performed, the combined database of results may be converted into a response plane of n dimensions, an example of which is illustrated in **Fig. 4****.** Therein, again the axis 28 indicates the wind speed and the axis 29 indicates the wind turbulence while the ordinate 27 indicates the number of standard cycles (being an example of a contribution to wear). The estimated number of standard cycles 30 is here given as a surface plot, in particular indicating the mean number of standard cycles.

The simulations may further comprise the results for the minimum/maximum/standard deviation of the number of standard cycles, as for example derived from the data cloud 30 illustrated in Fig. 3.

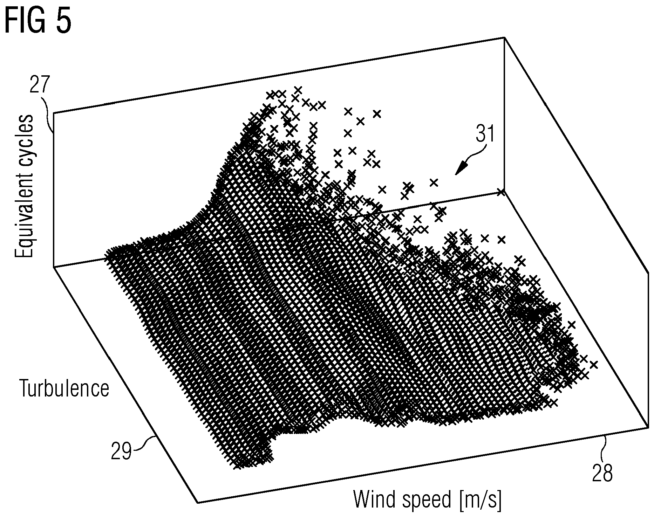

**Fig. 5** illustrates an example of applying the simulation result as depicted in Fig. 4 for the evaluation of the operation of a wind turbine. Thereby, again the axis 28 indicates the wind speed as experienced by the wind turbine and the axis 29 indicates the turbulence as actually experienced by the wind turbine. For each operational condition defined by the wind speed and the turbulence, an associated contribution to wear can be derived by looking up the respective value from the simulation results 30 or by interpolating the respective value from neighboring values of slightly different operational conditions.

Applying the simulation results 30 to the wind turbine under consideration thereby provides the estimated wear indicators 31 the wind turbine is predicted to have experienced or is determined to have been experienced. Thus, the simulation results 30 are used to swiftly interpolate the mean accumulated damage for the given condition the wind turbine under consideration has been subjected to.

The response plane is created by assigning the result (number of equivalent fatigue cycles), each of the afore-mentioned calculations to the relevant combinations of input values (in this case wind speed and turbulence) which then forms the basis of an interpolation table. From the table the output can quickly be interpolated for an arbitrary combination of wind speed and turbulence, as is illustrated in Fig. 5. Meshing the input parameter space densely and using the table to interpolate the respective number of equivalent cycles, the surface 30 as illustrated in Fig. 4 can be created.

For a given turbine the table or the simulation results 30 may be applied on the given input combinations, so that some combinations never occur and other occur several times. The operational conditions also comprised in the Fig. 5 are exemplary conditions experienced from a three-year operation of an example wind turbine. In the example illustrated in **Fig. 5** the average number of cycles (mean Ncyc) is applied, but alternatively one can use a 95% upper percentile or whichever statistical safety is needed. The method may be applied to statistical data (10 minutes maximum, minimum and mean) and may (once the simulation result database is created) be very fast.

A wind turbine may log statistical data regarding operational condition which may be retrieved through a wind farm communication network. Embodiments of the present invention may apply the determination of the contribution to wear or the accumulated wear to all turbines in the wind park. Then it may be possible to judge wind turbine specific the actual utilization of the bearings which is experienced by each individual bearing.

After a significant time of operation (preferably at least 80% of one full year of operation), a clear picture or diagnosis of the given bearing may be obtained. Further, it may be possible to predict the remaining (unused life of the bearing upon decommission if the turbine continues to operate with the same controller settings). This information can be used on future turbine designs and/or to adjust the model of the given turbine in order to release (or increase) warranty accruals.

In addition to that, the determined information may be used for each individual wind time to manually adjust/optimize the inputs to the controller which would enable the utilization of potential excessive capacity in the bearing with the aim of increasing the annual energy production, load attenuation on critical components or other benefit.

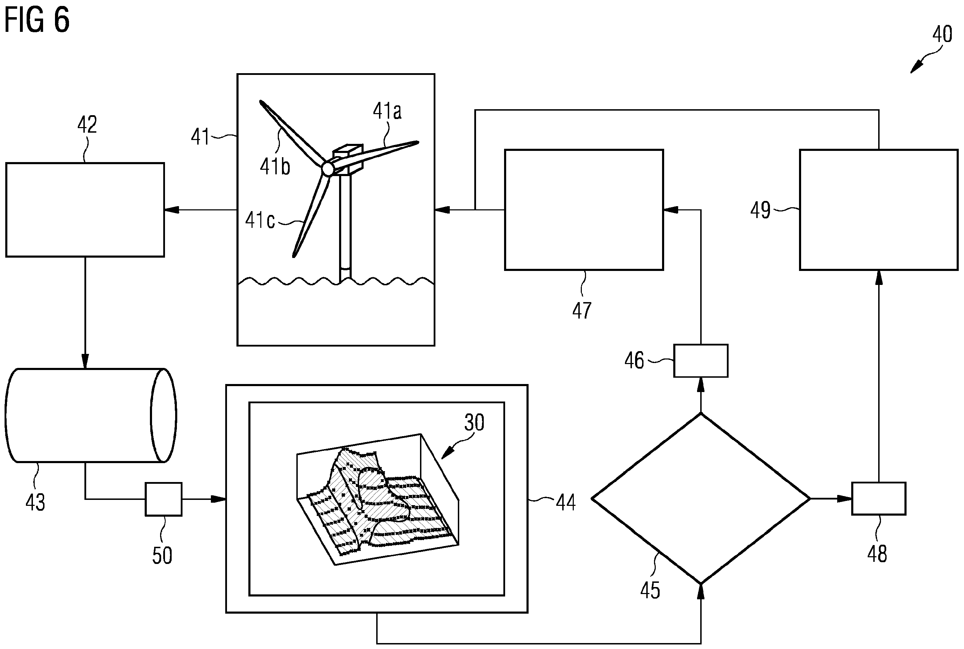

**Fig. 6** therefore illustrates an exemplary cycle for optimization, according to an embodiment of the present invention. The scheme 40 illustrates a wind turbine 41 which may also be configured according to an embodiment of the present invention. In a method block or feature block 42 operational data of the wind turbine 41 is captured. Therefore the wind turbine continuously produces data which is captured and stored in a database. Each turbine experiences unique wind and wave conditions depending on the location, spacing, positioning in the given site and so on. The most optimal controller setting is achieved when tuned according to the given condition which is experienced by the specific and individual wind turbine.

In a next method step 43, the data for a given operational time, for example from the complete duration of the operational life of the turbine, is evaluated (in particular using/accessing a result function 30 as it is illustrated in Fig. 4) in order to determine the remaining life for each relevant component by the use of the above-mentioned response plane method.

The remaining life of the bearing is calculated in a schematic method step 44, thereby applying the simulation results 30 (see also Fig. 4). Thus, the step 44 involves to perform a method of estimating a wear indicator of a bearing of a wind turbine, wherein the wear indicator in particular indicates the number of equivalent fatigue cycles at least one bearing has experienced.

In an evaluation step 45 it is evaluated whether the remaining lifetime (as obtained by performing a method of estimating a wear indicator) is more or less than a desired or designed lifetime. Thereby by comparing the remaining life of the component with the expected lifetime of the turbine or the component, it can be judged, if the local conditions of the turbine allow more or less aggressive operation.

If the remaining lifetime is greater than the desired lifetime, it is switched to the branch 46 which leads to an adjustment step 47. Thereby, the controller is optimized for increased bearing usage (for example involving to increase the AEP, load attenuation, reduction of loads on a component with high risk/failure rate, e.g. main rotor bearing, etc.). Thereby the wind turbine may manually or automatically be tuned with the aim of increasing for example the annual energy production or attenuation of utilization of other critical components. All the overall risk the turbine can be reduced and thereby release warranty accrual.

If the remaining lifetime as estimated is less than the desired lifetime, it is led to branch 48 leading to adjustment step 49. In the adjustment step 49 the controller is optimized for reduced bearing usage (for example involving to reduce the AEP, accept higher loads one a component (e.g. main rotor bearing), thereby reducing pitch travel, etc.). Thus, the wind turbine may be manually or automatically tuned with the aim of conserving the critical component by reducing AEP or other higher load on other components. Alternatively, it can be decided that an increased risk can be allowed for the specific turbine.

After tuning the controller new data is collected and after a given period where a sufficient amount of data is accumulated, a new optimization of the controller can be performed. These processes may be repeated.

The methodology may be used especially for a blade bearing of the wind turbine but may also be used for a main bearing, a yaw bearing, a gearbox and/or similar components of the wind turbine.

The embodiments of the present invention may provide one or more of the following benefits or advantages:
The methodology may enable the ability to process lifetime data from vast amount of turbines (fleet evaluation).

This can be used to determine the remaining life of the bearing on each individual wind turbine and thereby enable the ability to either optimize controller and/or site/fleet manually or by embedded software on individual wind turbine level.

All conceivable operation conditions may have been considered in advance and for those the respective contribution to wear may be available. Based on that, the component (bearing) load experienced may quickly be calculated for example on a 10 minute statistics data. Thus, embodiments of the present invention may convert operating data directly into fatigue damage.

Further, quickly an overview of the damage in each individual bearing in the fleet may be provided, since all conceivable conditions have been simulated in advance and calculated how they affect the component (for example bearing).

If the simulation diagnoses a reserve of capacity of using the respective bearings, the wind turbine may be controlled to increase AEP and/or reduce failure rates.

The method illustrated in Fig. 1 may be performed by an arrangement 50 (see Fig. 6) for determining a contribution to wear of at least one bearing of a wind turbine 41 according to an embodiment of the present invention, the arrangement comprising: a processor adapted: to perform a computational simulation of the mechanical behaviour of at least a portion of the wind turbine 41 including the bearing for each of plural given operation conditions of the wind turbine across a predetermined simulation time window 8; to determine at least one mechanical moment Mx, My, in particular two mechanical moments, across the simulation time window 8 based on the simulation, the mechanical moment acting on the bearing; to determine at least one force related quantity 21 time series 22 across the simulation time window 8 based on the mechanical moment across the simulation time window; to determine a stress related quantity 23 time series (24a,...) across the simulation time window based (8) on the force related quantity time series and in particular based on a pitch position; to evaluate the stress related quantity 23 time series (24a,...), in order to obtain the contribution to wear (Ncyc) associated with the respective operation condition and the simulation time duration; an electronic storage for storing the contribution to wear (Ncyc) associated with the respective operation condition.

The wind turbine 41 (see Fig. 6) according to an embodiment of the present invention comprises: at least one bearing, in particular pitch adjustment system bearing (for a rotor blade 41a or 41b or 41c); monitoring equipment 42 for monitoring operation conditions during wind turbine operation across plural operational duration intervals; retrieval equipment for retrieving or interpolating damage contribution for each operational duration interval from stored simulation results for the respective operation condition; a processor adapted to sum the damage contributions, in order to obtain the wear indicator; a controller adapted to adjust a control of the wind turbine in order to increase or decrease bearing usage depending on the estimated wear indicator.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method of determining a contribution to wear (Ncyc) of at least one bearing of a wind turbine (41), the method comprising:
performing a computational simulation of the mechanical behaviour of at least a portion of the wind turbine (41) including the bearing for each of plural given operation conditions (28, 29) of the wind turbine across a predetermined simulation time window (8);
determining at least one mechanical moment (Mx, My), in particular two mechanical moments, across the simulation time window (8) based on the simulation, the mechanical moment acting (Mx, My) on the bearing;
determining at least one force related quantity (21) time series (22) across the simulation time window (8) based on the mechanical moment (Mx, My) across the simulation time window (8);
determining a stress related quantity (23) time series across (24a,...) the simulation time window (8) based on the force related quantity time series (22) and in particular based on a pitch position (14);
evaluating the stress related quantity time series (24a,...), in order to obtain the contribution to wear (Ncyc) associated with the respective operation condition (28, 29) and the simulation time duration.

2. Method according to the preceding claim,
wherein the force related quantity (22) indicates a mechanical force, in particular roller element force or ball force, acting at at least one position at a raceway of the bearing,
wherein the stress related quantity (23) indicates a stress, in particular contact pressure, at at least one position at a raceway of the bearing; and/or
the method further comprising:
evaluating the stress related quantity time series (24a,...) together with a pitch angle position (14) of a rotor blade supported by the bearing to employing a method of cycle counting, in particular a rainflow count (7).

3. Method according to one of the preceding claims, wherein evaluating the stress related quantity (23) time series (24a,...) comprises:
assigning different values of the stress related quantity in the time series to different bins;
counting number of occurrences in each bin;
combining the numbers of occurrences considering the associated bins, in particular summing the numbers of occurrences weighted with a bin number, in order to obtain the contribution to wear.

4. Method according to one of the preceding claims,
wherein the bearing is at least a portion of a bearing system of a blade pitch angle adjustment system for adjusting a pitch angle of a rotor blade (41a); and/or
wherein the portion of the wind turbine (41) includes at least one of:
at least one rotor blade (41a);
a bearing system of a blade pitch angle adjustment system;
at least one raceway of at least one bearing;
at least one roller element or roller ball of at least one bearing; and/or
wherein the simulation time window is between 5 min and 15 min, in particular substantially 10 min.

5. Method according to one of the preceding claims, wherein the operation condition contains values indicating at least one of:
at least one external or environmental parameter, the wind turbine under consideration is subjected to, in particular comprising at least one of:
a wind speed (28), in particular minimum and/or maximum and/or mean and/or standard deviation across the simulation time window;
a wind turbulence (29), in particular minimum and/or maximum and/or mean and/or standard deviation across the simulation time window

6. Method according to one of the preceding claims, wherein the operation condition contains values indicating at least one of:
at least one wind turbine internal operational parameter, associated with the wind turbine under consideration, in particular comprising at least one of:
a control setting;
a control scheme;
a rotational speed;
a rotor blade load, in particular flap and/or edgewise moment;
a wind turbine power output;
a pitch angle of the rotor blade comprising the bearing.

7. Method according to one of the preceding claims, wherein across the simulation time window (8) the pitch angle (14) and/or rotational speed stays constant or changes due to simulated control of the wind turbine according to one of plural wind turbine control schemes.

8. Method according to one of the preceding claims,
wherein the contribution to wear (Ncyc) indicates degree of damage and/or degree of impairment and/or degree of wear and/or remaining life time and/or elapsed life time,
wherein the contribution to wear is in particular expressed as number of standard or equivalant stress cycles (Ncyc) of the bearing, in particular in dependency of at least a wind speed and a wind turbulence.

9. Method according to one of the preceding claims, wherein the simulation is run for each of the respective operation conditions (28, 29) several times with different initial values of position of one or more roller elements or roller balls, in order to obtain a distribution (30) of contribution to wear associated with the respective operation condition and the simulation time duration,
wherein in particular statistical quantities, in particular mean and/or minimum and/or maximum and/or standard deviation, of the distribution of the contribution to wear are determined.

10. Method according to one of the preceding claims, comprising:
storing the contribution to wear (Ncyc) associated with the respective operation condition in an electronic storage, in particular as simulation results requestable by input of the operation condition of interest.

11. Method of estimating a wear indicator (Ncyc) of a bearing of a wind turbine (41), the method comprising:
recording (42) operation conditions during wind turbine operation across plural operational duration intervals;
retrieving or interpolating damage contribution for each operational duration interval from stored simulation results (30) for the respective operation condition, in particular as obtained according to the preceding claim;
summing the damage contributions, in order to obtain the wear related indicator.

12. Method of controlling a wind turbine comprising at least one bearing, in particular pitch adjustment system bearing, comprising:
estimating a wear indicator of the bearing according to the preceding claim;
adjusting a control of the wind turbine in order to increase or decrease bearing usage depending on the estimated wear related indicator.

13. Method according to the preceding claim, further comprising:
comparing the estimated wear indicator to a design wear indicator;
adjusting the control comprises:
adjust control of the wind turbine (41) for increased bearing usage, in particular including increasing power output, if the estimated wear indicator indicates less wear than the design wear indicator; and/or
adjust control of the wind turbine (41) for decreased bearing usage, in particular including decreasing power output, if the estimated wear indicator indicates more wear than the design wear indicator.

14. Arrangement for determining a contribution to wear of at least one bearing of a wind turbine (41), the arrangement comprising:
a processor adapted:
to perform a computational simulation of the mechanical behaviour of at least a portion of the wind turbine (41) including the bearing for each of plural given operation conditions of the wind turbine across a predetermined simulation time window (8);
to determine at least one mechanical moment (Mx, My), in particular two mechanical moments, across the simulation time window (8) based on the simulation, the mechanical moment acting on the bearing;
to determine at least one force related quantity (21) time series (22) across the simulation time window (8) based on the mechanical moment across the simulation time window;
to determine a stress related quantity (23) time series (24a,...) across the simulation time window based (8) on the force related quantity time series and in particular based on a pitch position;
to evaluate the stress related quantity (23) time series (24a,...), in order to obtain the contribution to wear (Ncyc) associated with the respective operation condition and the simulation time duration;
an electronic storage for storing the contribution to wear (Ncyc) associated with the respective operation condition.

15. Wind turbine (41), comprising:
at least one bearing, in particular pitch adjustment system bearing;
monitoring equipment for monitoring operation conditions during wind turbine operation across plural operational duration intervals;
retrieval equipment for retrieving or interpolating damage contribution for each operational duration interval from stored simulation results for the respective operation condition;
a processor adapted to sum the damage contributions, in order to obtain the wear indicator;
a controller adapted to adjust a control of the wind turbine in order to increase or decrease bearing usage depending on the estimated wear indicator.
